# EUROPEAN PATENT SPECIFICATION

(11) **EP 4 082 877 B1**
(45) Date of publication and mention of the grant of the patent: **07.08.2024**
(21) Application number: 22178788.0
(22) Date of filing: 18.06.2020
(51) Int. Cl.: B62D 55/04, B60C 11/03

(54) **PNEUMATIC VEHICLE TYRE FOR FORESTRY USE**
FAHRZEUGLUFTREIFEN FÜR DIE FORSTWIRTSCHAFT
PNEU DE VÉHICULE PNEUMATIQUE POUR UTILISATION FORESTIÈRE

(43) Date of publication of application: 02.11.2022
(62) Divisional of application: 20397509.9
(73) Proprietor: Nokian Raskaat Renkaat Oy, 37101 Nokia (FI)
(72) Inventor: PALOMÄKI, Pinja, 37101 Nokia (FI); CLAASSEN, Caleb, 37101 Nokia (FI); RÄISÄNEN, Samuli, 37101 Nokia (FI); VISKARI, Jari, 37101 Nokia (FI)
(74) Representative: Berggren Oy

(56) References cited:
- EP-A1- 2 531 362
- EP-A1- 3 027 430
- WO-A1-2019/016430
- JP-A- H06 320 915
- US-A1- 2016 068 025

## Description

### Field of the invention

The invention to be presented relates to a pneumatic tyre for forestry use. The invention to be presented relates further to forestry machine having the pneumatic tyre. The invention to be presented relates further to a method of installing the pneumatic tyre onto a forestry machine.

### Background of the invention

Pneumatic tyres applied in forestry, especially in forestry machines, are used in severe off-road conditions in which the tyre is subject to damages caused by rough terrain, stones, tree stumps and logging waste removed from felled trees. Additionally, a continuous track installed on the tyre wears down the tyre and the tyre is subject to damages caused by the track that is dislocated and forced to move on the tyre in such a way that projecting parts of the track may damage the tyre or the track is not optimally placed on the tyre. Not only the track is used to improve the traction capability of tyre but alternatively also a tyre chain may be in use. The tyre chain wears down the tyre and may be dislocated when the tyre is used in rough terrain.

A pneumatic tyre suitable for forestry use and applied in forestry machines is shown in EP 3412475 A1. A track suitable for use with pneumatic tyres is shown in WO 2019/016430 A1. Pneumatic tyres for agricultural use are disclosed in WO 2011/094828 A1 and JP H06320915 A. Another pneumatic tyre for forestry use, which is prior art according to Article 54(3) EPC, is known from EP 3738791 A1. A pneumatic tyre for forestry use according to the preamble of claim 1 is disclosed in WO 2015/015525 A1.

### Brief summary of the invention

The pneumatic tyre for forestry use according to the invention is presented in claim 1. The forestry machine according to the invention is presented in claim 12. The method of installing tyres onto a forestry machine according to the invention is presented in claim 13.

According to the presented invention the pneumatic tyre for forestry use comprises a ground-engaging tread section extending around the tyre in the circumferential direction of the tyre, the tread section defining an imaginary equatorial plane that is perpendicular to an axial direction of the tyre and passes through a centre region of the tread section; a pair of bead sections, located on two opposite sides of the tyre; a pair of sidewall sections, located on two opposite sides of the tyre, wherein each sidewall section extends between the respective bead section and the tread section, and wherein the tread section defines a pair of shoulder regions adjacent to the respective sidewall section.

The tread section comprises a tread block row on both sides of the equatorial plane and each tread block row extends in the circumferential direction. Each tread block row comprises a series of primary tread blocks that are spaced along the circumferential direction and define tread grooves located between the primary tread blocks and defining a tread groove bottom from the level of which the primary tread blocks extend radially to a height at which each primary tread block comprises a radially outermost surface; wherein each primary tread block is oriented obliquely with respect to the circumferential direction and extends obliquely with respect to the axial direction from the centre region to the shoulder region.

Each primary tread block comprises the radially outermost surface and an axially outermost shoulder surface, the shoulder surface in the shoulder region being oriented transversally in relation to the radially outermost surface. The radially outermost surface provides a supporting surface suitable for supporting a tyre chain or a track which can be placed on the tread section and the axially outermost shoulder surface provides a supporting surface suitable for supporting the chain or the track.

Each tread block row further comprises a series of elevated sections, each elevated section being located in the tread groove between two consecutive primary tread blocks with one of which the elevated section is united, each elevated section extending radially from the level of the tread groove bottom and extending in the tread groove obliquely with respect to the axial direction to the shoulder region. Each elevated section comprises a radially outermost surface and an axially outermost shoulder surface in such a way that the elevated section extends radially from the level of the tread groove bottom to a height that is reduced with respect to the height of the radially outermost surfaces of the primary tread blocks; that the shoulder surface in the shoulder region is oriented transversally in relation to the radially outermost surface of the elevated section; and that the radially outermost surface of the elevated section provides a protecting surface suitable for safeguarding the tread groove bottom from the tyre chain or the track and the shoulder surface of the elevated section provides a supporting surface suitable for supporting the tyre chain or the track.

Each elevated section with which each primary tread block unites is located at a rear wall of the primary tread block, a side surface of the primary tread block forming the rear wall, and there is no elevated section at a front wall of the primary tread block, the front wall being at the opposite side of the primary tread block.

According to the presented invention the tyre is applied in a forestry machine. The forestry machine comprises a frame, the frame having two opposite sides and being wheeled for propulsion of the forestry machine and having two or more wheel assemblies with tyres on each of the two opposite sides of the frame, at least one of the wheel assemblies comprising a tyre according to the presented invention. The forestry machine further comprises a continuous track circling one of the wheel assemblies including the tyre and/or a pair of wheel assemblies including the tyre and being placed on the tread section of the tyre, the track being in contact with the primary tread blocks and with the elevated sections.

According to an example, the radially outermost surface of the elevated section provides the protecting surface safeguarding the tread groove bottom from the track, and the axially outermost shoulder surface of the elevated section provides the supporting surface supporting the track.

According to presented invention the tyre is applied in a method of installing tyres onto a forestry machine. The forestry machine includes a frame, the frame having two opposite sides and being wheeled for propulsion of the forestry machine and having two or more wheel assemblies with tyres on each of the two opposite sides of the frame. The method comprising mounting at least one of the wheel assemblies comprising a tyre according to the presented invention to the frame of the forestry machine.

The method may further include installing a continuous track to circle one of the wheel assemblies including the tyre and/or a pair of wheel assemblies including the tyre and being placed on the tread section of the tyre, the track being in contact with the primary tread blocks and the elevated sections.

An advantage is that the radially outermost surface of the elevated section protects the groove bottom against damage caused by off-road conditions when moving along rough terrain. Additionally, the radially outermost surface protects the groove bottom from projecting parts of a continuous track, or a tyre chain, digging into the material of the groove bottom when, for example, the track is forced to move laterally on the tread section as a consequence of the off-road conditions.

An advantage is that the shoulder surfaces of the primary tread blocks and the elevated sections prevent the track from moving laterally on the tread section. The shoulder surfaces keep the track in place in such a way that in a lateral, axial direction they support the track and prevent the projecting parts of the track from moving onto the tread section.

A further advantage provided by the elevated sections is increased traction capability as a consequence of axially and/or radially extending edges of the elevated sections.

The forestry machine is e.g. a felling machine for felling trees, a harvester for felling trees and processing tree trunks, or a forwarder for collecting and transporting logs and timber.

### Description of the drawings

The presented invention will be described in greater detail in the following, with reference to the accompanying drawings.
Figure 1 shows a tyre according to the presented invention.
Figure 2 shows part of the tread section of the tyre shown in Fig. 1.
Figure 3 shows the arrangement of the tread blocks of the tyre shown in Fig. 1, as seen from above the tread section.
Figure 4 shows part of the tread section of the tyre shown in Fig. 1 as seen from a side of the tyre.
Figure 5 shows in a cross-section of the tyre of Fig. 1 the location of primary tread blocks and elevated sections in relation to a track placed on the tread section of the tyre.
Figure 6 shows part of the cross-section shown in Fig. 5.
Figure 7 shows a forestry machine on which the tyre according to the invention may be applied.

### Detailed description of the invention

The presented invention relates to a pneumatic tyre 100 which is suitable for use in forestry, especially in forestry machines.

The forestry machine is a timber-harvesting vehicle adapted to operate in rough terrain and handle timber. The forestry machine is adapted to fell trees in a felling site or to transport timber in the felling site, for example a felling machine for felling trees, a harvester for felling a tree and processing the trunk of the felled tree, including debranching and cross-cutting, or a forwarder for collecting and transporting timber, e.g. to a collection point.

This description deals with a pneumatic tyre that is adapted to be in contact with the ground surface. The tyre is filled with a gas, such as air, e.g. by means of an inner tube or without it. The ground-engaging tread section of the tyre is provided on the circumference of the tyre and constitutes an endless surface in the circumferential direction of the tyre, making it possible for the tyre to roll forward.

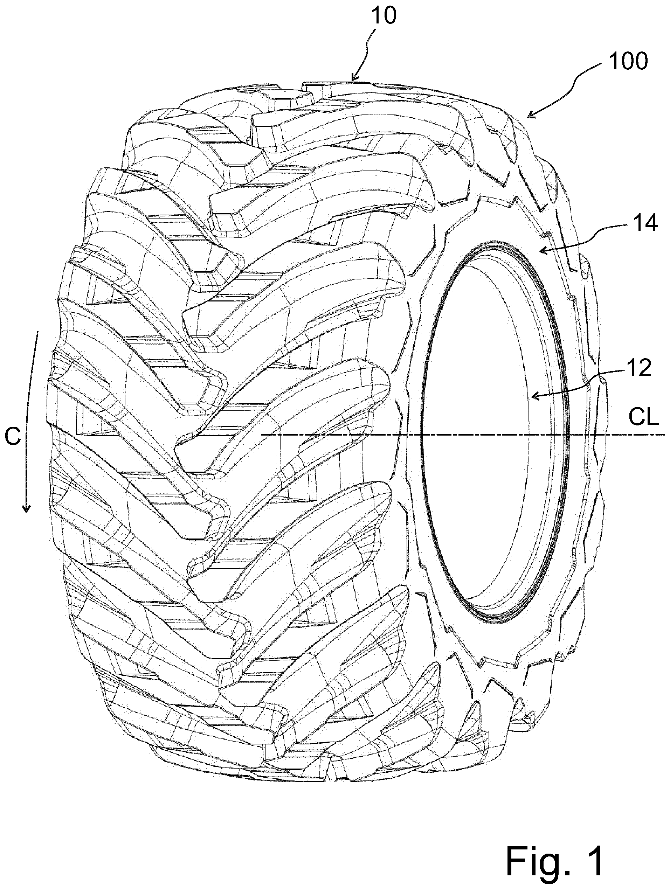

With reference to Figs. 1 to 6, the tyre 100 comprises a ground-engaging tread section 10, a pair of bead sections 12, and a pair of sidewall sections 14.

The tread section 10 extends around the tyre 100 in a circumferential direction C of the tyre 100, the tread section 10 defining an imaginary equatorial plane EP that is perpendicular to axial directions A and passes through a centre region 40 of the tread section 10.

The axial direction A refers to directions that extend from the equatorial plane EP and are parallel to the axis of rotation CL of the tyre, i.e. the centreline CL defined by the circular shape of the tyre 100. The equatorial plane EP refers to a plane perpendicular to the axis of rotation CL and passing through the centre region 40, preferably the centre of the tread section 10.

The bead sections 12 are located on two opposite sides of the tyre 100. Preferably, the bead sections 12 are adapted to secure the tyre 100 to a wheel rim.

The sidewall sections 14 are located on two opposite sides of the tyre 100. Each sidewall section 14 extends between the respective bead section 12 and the tread section 10. The tread section 10 may define a pair of shoulder regions 16, each shoulder region 16 being adjacent to the respective sidewall section 14.

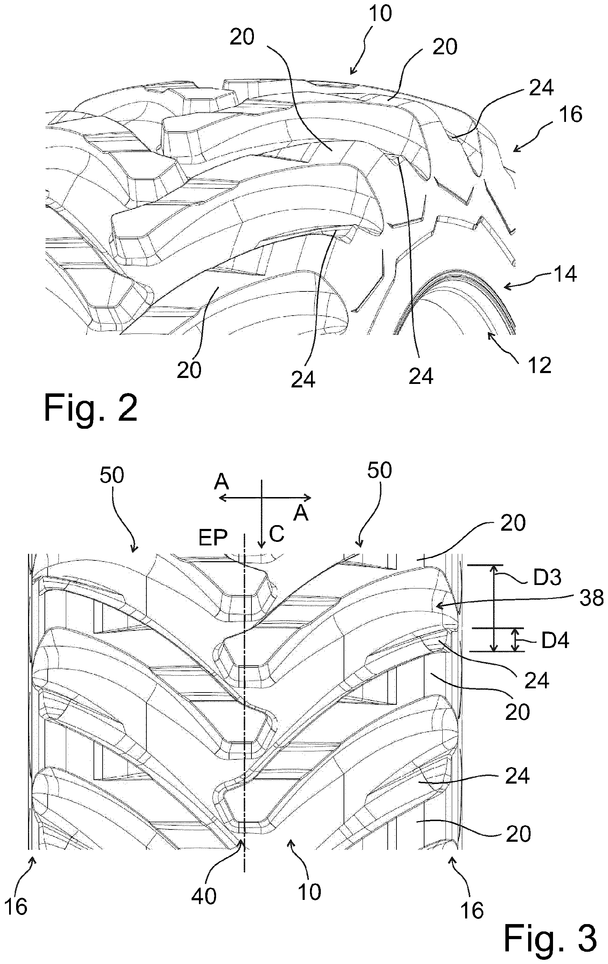

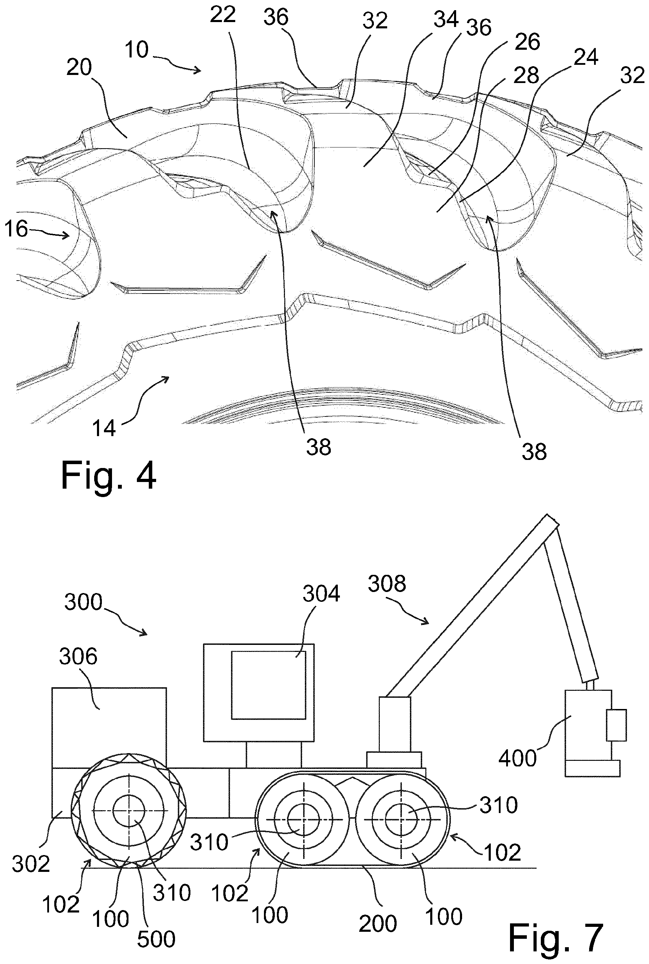

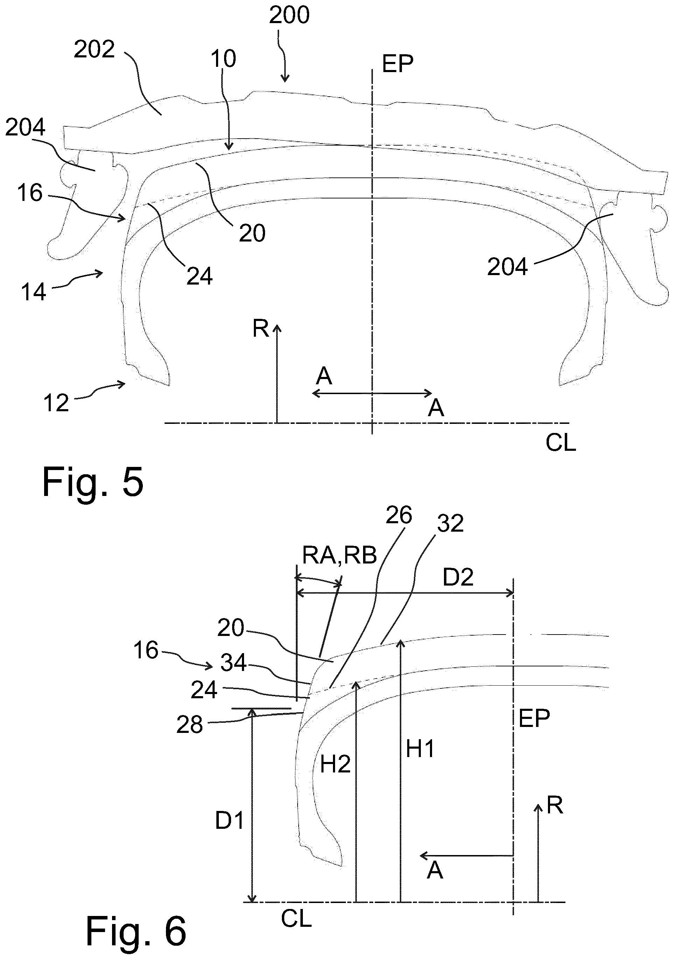

The tread section 10 comprises a tread block row 50 on both sides of the equatorial plane EP, each tread block row 50 including tread blocks and extending in the circumferential direction C, see Fig. 3. Each tread block row 50 comprises a series of primary tread blocks 20 that are spaced along the circumferential direction C and define tread grooves 38 located between the primary tread blocks 20 and defining a tread groove bottom 22 (see Fig. 4). The primary tread blocks 20 extend radially from the level of the tread groove bottom 22. The primary tread blocks 20 extend radially to a height H1 from the axis of rotation CL (see Fig. 6), at which height H1 each primary tread block 20 comprises a radially outermost surface 32.

Each primary tread block 20 is oriented obliquely with respect to the circumferential direction CL. The primary tread block 20 extends obliquely with respect to the axial direction A from the centre region 40 to the shoulder region 16.

According to an example, the height H1 relates to the height of the tread section 10 excluding the shoulder region 16, i.e. to the height of the radially outermost surface 32.

Preferably, the primary tread blocks 20 extend to the centre region 40 and cross the equatorial plane EP. Preferably, all the tread grooves 38 of the tyre section are connected to each other.

According to an example, see Figs 1 and 3, the primary tread blocks 20 alternate in the centre region 40 in such a way that every other primary tread block 20 belongs to one of the tread block rows 50 and every other primary tread block 20 belongs to the other one of the tread block rows 50.

According to an example, in the centre region 40, the primary tread block 20 may include an end section directed in the axial direction A towards the opposite side of the tread section 10.

According to an example, in the centre region 40, e.g. at the equatorial plane EP, the primary tread block 20 may include one or more shallow grooves extending in the circumferential direction C across the primary tread block 20. The depth of the grooves being at the most 20%, or 25%, or preferably at the most 30%, of the height of the primary tread block 20 with respect to the tread groove bottom 22.

Preferably, in the tread section 10, the percentage of the area covered by the tread grooves 38 is at the most 25%, 30%, or 35%, or preferably at the most 40%, of the area covered by both the tread grooves 38 and the primary tread blocks 20. Preferably, the primary tread block 20 is oriented obliquely at an angle of 30° to 60°, or 35° to 55°, or 40° to 50°, with respect to the circumferential direction C.

Preferably, the centre region 40 covers in the axial direction A not more than 5%, 10%, or 15%, or preferably not more than 20% of the width of the tread section 10.

The tread section 10 further comprises a series of elevated sections 24 of the tread grooves 38. Each elevated section 24 is in the tread groove 38 (see Fig. 4) between two consecutive primary tread blocks 20. The elevated sections 24 extend radially from the level of the tread groove bottom 22. The elevated section 24 extends in the tread groove 38 obliquely with respect to the axial direction A to the shoulder region 16.

Thus, each tread block row 50 includes one series of elevated sections 24 as described above. In each tread block row 50, the elevated sections 24 are spaced along the circumferential direction C and alternate with the primary tread blocks 20.

Preferably, the tread groove bottom 22 extends obliquely with respect to the axial direction A to the sidewall section 14 on one side of the elevated section 24 only as shown in Figs. 1 and 4. Thus, on the one side of the elevated section 24, the elevated section 24 is separated from one of the primary tread blocks 20 by the tread groove bottom 22.

On the other side, i.e. on the opposite side, of the elevated section 24, the elevated section 24 unites with another one of the primary tread blocks 20, preferably in a grooveless manner. According to an example, the elevated section 24 unites with the primary tread block 20 in such a way that a radially outermost surface 26 of the elevated section 24 extends towards the primary tread block 20 and curves smoothly upwards to form a side surface of the primary tread block 20, the side surface extending upwards, e.g. substantially in a radial direction, to the radially outermost surface 32.

Each elevated section 24 unites with only one of the primary tread blocks 20.

The elevated section 24 supports the primary tread block 20 and prevents cracking at the root of the primary tread block 20.

According to an example, the tread groove bottom 22 unites with the adjacent primary tread block 20 and with the adjacent elevated section 24 in such a way that the tread groove bottom 22 extends in opposite directions towards the adjacent primary tread block 20 and the adjacent elevated section 24 and curves smoothly upwards to form a side surface of the adjacent primary tread block 20 and a side surface of the adjacent elevated section 24, the side surface extending upwards, e.g. substantially in a radial direction, to the radially outermost surface 26, 32.

According to the present invention, the above-mentioned side surface forms the rear wall of the primary tread block 20 and there is no elevated section 24 at the front wall of the primary tread block 20, i.e. at the opposite side of the primary tread block 20.

The front and rear walls are defined by the intended direction of rotation of the tyre 100 in such a way that the rear wall forms the trailing edge of the primary tread block 20 and the front wall forms the leading edge of the primary tread block 20. According to the intended direction of rotation, the end section of the primary tread block 20 at the centre region 40 is in contact with the ground before the other end section of the primary tread block 20 at the shoulder region 16.

Preferably, the elevated section 24 is oriented obliquely at an angle of 30° to 60°, or 35° to 55°, or 40° to 50°, with respect to the circumferential direction C, and/or the orientation of the elevated section 24 substantially corresponds to the orientation of the primary tread block 20.

Each elevated section 24 comprises the radially outermost surface 26 and an axially outermost shoulder surface 28 (also herein referred to as the shoulder surface 28). The shoulder surface 28 is oriented transversally in relation to the radially outermost surface 26.

The radially outermost surface 26 forms the top surface of the elevated section 24 and the shoulder surface 28 forms the end surface of the elevated section 24, see Figs. 2 and 4. The shoulder surface 28 may form an integral part of the surface of the sidewall section 14. According to an example, the shoulder surface 28 unites with the surface of the sidewall section 14 in a grooveless or seamless manner.

According to an example, the shoulder surface 28 is separated from the radially outermost surface 26 by an edge of the elevated section 24. The edge is preferably rounded.

According to an example, the shoulder surface 28 inclines towards the tread groove bottom 22 adjacent to the shoulder surface 28.

According to an example, as shown in Fig. 4, each primary tread block 20 in addition to the radially outermost surface 32 comprises an axially outermost shoulder surface 34 (also herein referred to as the shoulder surface 34). The shoulder surface 34 is oriented transversally in relation to the radially outermost surface 32.

The radially outermost surface 32 forms the top surface of the primary tread block 20 and the shoulder surface 34 forms the end surface of the primary tread block 20. The shoulder surface 34 may form an integral part of the surface of the sidewall section 14. According to an example, the shoulder surface 34 unites with the surface of the sidewall section 14 in a grooveless or seamless manner.

According to an example, as shown in Fig. 1, the shoulder surface 34 is separated from the radially outermost surface 32 by an edge of the primary tread block 20. The edge is preferably rounded.

The elevated section 24 extends radially from the level of the tread groove bottom 22 adjacent to the elevated section 24 to a height H2 from the axis of rotation CL (see Fig. 6), which height H2 is reduced with respect to the height H1 of the radially outermost surfaces 32 of the primary tread blocks 20.

According to an example, in the tread section 10 excluding the shoulder region 16, i.e. along the radially outermost surface 26, the height of the elevated section 24 with respect to the tread groove bottom 22 is at the most 20%, 30%, or 40%, or preferably at the most 50%, of the height of the primary tread block 20 with respect to the tread groove bottom 22.

According to an example, see Figs. 1 and 6, the radially outermost surface 26 of each elevated section 24 approaches gradually the level defined by the tread groove bottom 22 adjacent to the elevated section 24 while the elevated section 24 extends towards the centre region 40. Preferably, the elevated section 24 is less than 50%, or 40%, or preferably less than 30%, of the length of the primary tread block 20, measured along the primary tread block 20 in the tread section 10.

According to an example, see Figs. 4 and 6, the elevated section 24 and the primary tread block 20 extend to the sidewall section 14. The surface of the sidewall section 14 may extend to and unite with the shoulder surface 28 and/or with the shoulder surface 34. The shoulder surface 28 and the shoulder surface 34 together may form an integral part of the surface of the sidewall section 14.

According to an example, the shoulder surface 28 unites with the shoulder surface 34 in such a way that the shoulder surface 28 extends smoothly to the shoulder surface 34, preferably in a grooveless or seamless manner.

In Fig. 5 a track 200 to be placed on the tread section 10 is shown in a cross-section.

The track 200 may include a series of bodies 202 that extend in the axial directions A across the tread section 10 when placed on the tread section 10. Each body 202 may have two opposite, outer ends to each of which a guide plate 204 may be attached. The guide plates 204 preferably extend from the outer ends towards the centreline CL. The bodies 202 are articulatedly attached to each other to form the track 200 that is continuous and adapted to extend in the circumferential direction C.

The track 200, e.g. the guide plate 204, is further adapted to be placed adjacent to the shoulder region 16 and preferably the track 200, e.g. the guide plate 204, and the shoulder surface 28 (see Fig. 6) of the elevated section 24 are adjacent in the axial direction A.

Additionally, according to an example, the track 200, e.g. the guide plate 204, and the shoulder surface 34 (see Fig. 6) of the primary tread block 20 are adjacent in the axial direction A.

The above-mentioned forestry machine 300, see Fig. 7, may comprise a frame 302 having two opposite sides and being wheeled for propulsion of the forestry machine. On each side of the frame 302, there may be two or more wheel assemblies 102 each including a tyre. According to an example, a pair of wheel assemblies 102 may be installed to a bogie axle assembly of the frame 302. At least one of the wheel assemblies 102 comprises a tyre corresponding the tyre 100 according to the examples of this description. The wheel assembly 102 may comprise a rim on which the tyre 100 is installed and the wheel assembly 102 is, e.g. by means of the rim, connectable to the frame 302, e.g. to a wheel mount 310 on the frame. The bogie axle assembly may include the wheel mount 310.

On each side of the frame 302 the forestry machine 300 may have at least one track corresponding the continuous track 200, each track 200 circling a single wheel assembly 102 or a pair of wheel assemblies 102, the track being placed on the tread section 10 of the tyre 100. The track 200 is in contact with the primary tread blocks 20 and the elevated sections 24.

The frame 302 of the forestry machine 300 may be articulated. A cabin 304 with an operator's station, an engine 306 and an articulated boom 308 may be attached to frame 302. A tool 400 for handling timber may be attachable to an end of the boom 308. The tool 400 may be e.g. a felling head or harvester head used in a harvester or a timber grapple used in a forwarder.

The radially outermost surface 26 of the elevated section 24 offers a protecting surface adapted to protect the tread groove bottom 22 against damages caused by the track 200 to be placed on the tread section 10, see Figs. 5 and 6. Additionally, the shoulder surface 28 on a side of the tread section 10 offers a supporting surface adapted to support the track 200, e.g. the guide plate 204, that may contact the shoulder surface 28 which prevents lateral movement of the track 200. In an example, the shoulder surface 28 keeps the guide plate 204 from moving into the groove 38 and/or onto the tread section 10.

The elevated section 24 adds material onto the tread groove bottom 22 for protecting it against damages.

According to an example (see Figs. 5 and 6), additionally the shoulder surface 34 of the primary tread block 20 on a side of the tread section 10 offers a supporting surface adapted to support the track 200, e.g. the guide plate 204, that may contact the shoulder surface 34 which prevents lateral movement of the track 200. In an example, the shoulder surface 34 keeps the guide plate 204 from moving onto the tread section 10.

According to an example, the primary tread block 20 comprises in the radially outermost surface 32 one or more indentations 36 as shown in Fig. 4. The indentation 36 extends in the axial direction A across the primary tread block 20. The indentation 36 is adapted to support the track 200 and keep the track 200 in place.

Preferably, at least one of the indentations 36 is in the axial direction A aligned with the shoulder surface 28 of the elevated section 24. That is, the indentation 36 is directed towards the shoulder surface 28.

According to an example (see Fig. 6), for optimally supporting the track 200, inclination RA of the shoulder surface 28 of the elevated section 24 in relation to the radial direction R, or the equatorial plane EQ, equals or is substantially the same as inclination RB of the shoulder surface 34 of the primary tread block 20 in relation to the radial direction R, or the equatorial plane EQ. In the radial direction R, the shoulder surfaces 28, 34 are inclined in such a way that the farther the shoulder surfaces 28, 34 get from the centreline CL the nearer they get to the equatorial plane EQ.

According to an example, the above-mentioned inclination angle RA, RB is 0°, or at least 2°, or 5°, or at least 10°. Additionally, the above-mentioned inclination angle RA, RB may be at the most 20°, or 30°, or at the most 40°. Thus, the shoulder surfaces 28, 34 incline towards the radially outermost surfaces 26, 32.

According to an example as shown in Fig. 1, for optimally supporting the track 200, the shoulder surfaces 28, 34 of the primary tread blocks 20 and the elevated sections 24 are arranged in a circular pattern in relation to the centreline CL. Preferably, each shoulder surface 28, 34 includes a section on which the track 200 is supported. The sections on the shoulder surfaces 28, 34 are at equal or substantially equal distances D1 from the axis of rotation CL, see Fig. 6.

According to an example, for optimally supporting the track 200, the shoulder surfaces 34 of the primary tread blocks 20 and the shoulder surfaces 28 of the elevated sections 24 are in the axial direction A at equal distances D2 or at substantially equal distances D2 from the equatorial plane EP, see Fig. 6.

According to an example as shown in Fig. 3, for optimally protecting the tread groove bottom 22 against the track 200 that is rocking on the tread section 10, e.g. on the shoulder surface 34, the elevated section24 is positioned correspondingly.

Then, as described above, the elevated section 24 between a pair of the primary tread blocks 20 is closer to one of the primary tread blocks 20 of the pair.

Preferably, in the shoulder region 16 or at the shoulder surface 28 of the elevated section 24, the elevated section 24 is located within a distance D4 from the one primary tread block 20. The distance D4 is at the most 80%, or 60%, or preferably at the most 40%, of the distance D3 between the primary tread blocks 20 of the pair, the distance D3 substantially corresponding the width of the tread groove 38. The distances D3, D4 are measured in the circumferential direction C, preferably in the shoulder region 16 or at the shoulder surface 28.

The forestry machine 300 may have a tyre chain 500 encircling one or more tyres 100 and being placed on the tread section 10 of the tyre 100, see Fig. 7. The tyre chain 500 is in contact with the primary tread blocks 20 and the elevated sections 24.

According to an example as shown in Figs. 4 and 6, the shoulder surface 28 of the elevated section 24 supports the tyre chain 500 when the tyre chain 500 is placed on the tread section 10.

It is to be understood that the examples of the invention disclosed are not limited to the structures disclosed herein, but only by the scope of the appended claims.

It should also be understood that terminology employed herein is used for the purpose of describing particular examples only and is not intended to be limiting. Reference throughout this specification to "one example " or "an example" means that a particular feature, structure, or characteristic described in connection with the example is included in at least one example of the present invetion. Especially, in the examples above, when referring to a property of e.g. a single tread block then all functionally corresponding tread blocks may include the same property.

As used herein, a plurality of items or structural elements may be presented in a common list for convenience. However, these lists should be construed as though each member of the list is individually identified as a separate and unique member.

The verbs "to comprise" and "to include" are used in this document as open limitations that neither exclude nor require the existence of also un-recited features. Furthermore, it is to be understood that the use of "a" or "an", i.e. a singular form, throughout this document does not exclude a plurality, unless where specifically mentioned.

## Claims

1. A pneumatic tyre for forestry use, the tyre (100) comprising:
- a ground-engaging tread section (10) extending around the tyre in the circumferential direction (C) of the tyre, the tread section defining an imaginary equatorial plane (EP) that is perpendicular to an axial direction (A) of the tyre and passes through a centre region (40) of the tread section;
- a pair of bead sections (12), located on two opposite sides of the tyre;
- a pair of sidewall sections (14), located on two opposite sides of the tyre, wherein each sidewall section extends between the respective bead section and the tread section, and wherein the tread section defines a pair of shoulder regions (16) adjacent to the respective sidewall section;
- wherein the tread section comprises a tread block row (50) on both sides of the equatorial plane and each tread block row extends in the circumferential direction;
- wherein each tread block row comprises a series of primary tread blocks (20) that are spaced along the circumferential direction and define tread grooves (38) located between the primary tread blocks and defining a tread groove bottom (22) from the level of which the primary tread blocks extend radially to a height (H1) at which each primary tread block comprises a radially outermost surface (32);
- wherein each primary tread block is oriented obliquely with respect to the circumferential direction and extends obliquely with respect to the axial direction from the centre region to the shoulder region,
- wherein each primary tread block (20) comprises the radially outermost surface (32) and an axially outermost shoulder surface (34), the shoulder surface in the shoulder region (16) being oriented transversally in relation to the radially outermost surface (32), and
- wherein the radially outermost surface (32) provides a supporting surface suitable for supporting a track (200) which can be placed on the tread section and the axially outermost shoulder surface (34) provides a supporting surface suitable for supporting the track;
- wherein each tread block row (50) further comprises a series of elevated sections (24), each elevated section being located in the tread groove (38) between two consecutive primary tread blocks (20) with one of which the elevated section is united, each elevated section extending radially from the level of the tread groove bottom (22) and extending in the tread groove obliquely with respect to the axial direction to the shoulder region;
- wherein each elevated section comprises a radially outermost surface (26) in such a way
- that the elevated section extends radially from the level of the tread groove bottom to a height (H2) that is reduced with respect to the height (H1) of the radially outermost surfaces (26) of the primary tread blocks; and
- wherein each elevated section further comprises an axially outermost shoulder surface (28) in such a way
- that the shoulder surface (28) in the shoulder region (16) is oriented transversally in relation to the radially outermost surface (26) of the elevated section (24); and
- that the radially outermost surface (26) of the elevated section (24) provides a protecting surface suitable for safeguarding the tread groove bottom from the track (200) and the shoulder surface (28) of the elevated section (24) provides a supporting surface suitable for supporting the track
**characterized in that** each elevated section (24) with which each primary tread block (20) unites is located at a rear wall of the primary tread block (20), a side surface of the primary tread block (20) forming the rear wall, and there is no elevated section (24) at a front wall of the primary tread block (20), the front wall being at the opposite side of the primary tread block (20).

2. The tyre according to claim 1, wherein the tread groove bottoms (22) and the elevated sections (24) extend to the sidewall section (14) in such a way that the shoulder surface (28) of each elevated section forms an integral part of the surface of the sidewall section.

3. The tyre according to claim 1 or 2, wherein the shoulder surface (28) of the elevated section (24) unites with the shoulder surface (34) of the primary tread block (20) in such a way that the shoulder surface of the elevated section extends smoothly to the shoulder surface of the primary tread block.

4. The tyre according to claim 3, wherein the shoulder surface (28) of the elevated section (24) extends in a grooveless or seamless manner to the shoulder surface (34) of the primary tread block (20).

5. The tyre according to any one of claims 1 to 4, wherein inclination (RB) of the shoulder surface (28) of the elevated section (24) in relation to a radial direction (R) equals or is substantially the same as inclination (RA) of the shoulder surface (34) of the primary tread block (20) in relation to the radial direction.

6. The tyre according to any one of claims 1 to 5,
- wherein the shoulder surfaces (34) of the primary tread blocks (20) and the shoulder surfaces (28) of the elevated sections (24) are arranged in a circular pattern; and
- wherein the shoulder surfaces of the primary tread blocks and the shoulder surfaces of the elevated sections each comprise a section suitable for supporting the track (200) on the section, which sections are in the radial direction at equal distances (D1) or at substantially equal distances from the axis of rotation (CL) of the tyre.

7. The tyre according to any one of claims 1 to 6, wherein the shoulder surfaces (34) of the primary tread blocks (20) and the shoulder surfaces (28) of the elevated sections (24) are in the axial direction at equal distances (D2) or at substantially equal distances from the equatorial plane (EP).

8. The tyre according to any one of claims 1 to 7, wherein on one side of the elevated section (24), the elevated section is separated from one of the primary tread blocks (20) by the tread groove bottom (22), and wherein on the other side of the elevated section, the elevated section unites with another one of the primary tread blocks.

9. The tyre according to any one of claims 1 to 8, wherein the elevated section (24) unites with the primary tread block (20) in such a way that the radially outermost surface (26) of the elevated section (24) extends towards the primary tread block and curves smoothly upwards to form a side surface of the primary tread block.

10. The tyre according to any one of claims 1 to 9, wherein the radially outermost surface (26) of each elevated section (24) approaches gradually the level defined by the tread groove bottom (22) adjacent to the elevated section while the elevated section extends towards the centre region.

11. The tyre according to any one of claims 1 to 10, wherein the primary tread blocks (20) alternate in the centre region (40) in such a way that every other primary tread block is a primary tread block of one of the tread block rows (50) and every other primary tread block is a primary tread block of the other one of the tread block rows.

12. A forestry machine, comprising a frame, the frame having two opposite sides and being wheeled for propulsion of the forestry machine and having two or more wheel assemblies with tyres on each of the two opposite sides of the frame, at least one of the wheel assemblies comprising
- a tyre (100) according to any one of claims 1 to 11,
- wherein the forestry machine further comprises a continuous track (200) circling one of the wheel assemblies including the tyre and/or a pair of wheel assemblies including the tyre and being placed on the tread section (10) of the tyre, the track being in contact with the primary tread blocks (20) and with the elevated sections (24).

13. A method of installing tyres onto a forestry machine including a frame, the frame having two opposite sides and being wheeled for propulsion of the forestry machine and having two or more wheel assemblies with tyres on each of the two opposite sides of the frame, the method being **characterized by**
- mounting at least one of the wheel assemblies comprising a tyre (100) according to any one of claims 1 to 11 to the frame of the forestry machine.

14. The method according to claim 13, wherein the method further comprises
- installing a continuous track (200) to circle one of the wheel assemblies including the tyre and/or a pair of wheel assemblies including the tyre and being placed on the tread section (10) of the tyre, the track being in contact with the primary tread blocks (20) and with the elevated sections (24).

## Patentansprüche

1. Luftreifen für den Einsatz in der Forstwirtschaft, wobei der Reifen (100) Folgendes umfasst:
- einen bodenberührenden Laufflächenabschnitt (10), der sich in Umfangsrichtung (C) des Reifens um diesen herum erstreckt, wobei der Laufflächenabschnitt eine imaginäre Äquatorialebene (EP) definiert, die senkrecht zu einer axialen Richtung (A) des Reifens ist und durch einen Mittelbereich (40) des Laufflächenabschnitts verläuft;
- ein Paar Wulstabschnitte (12), die sich auf zwei gegenüberliegenden Seiten des Reifens befinden;
- ein Paar Seitenwandabschnitte (14), die sich auf zwei gegenüberliegenden Seiten des Reifens befinden, wobei sich jeder Seitenwandabschnitt zwischen dem jeweiligen Wulstabschnitt und dem Laufflächenabschnitt erstreckt, und wobei der Laufflächenabschnitt ein Paar Schulterbereiche (16) neben dem jeweiligen Seitenwandabschnitt definiert;
- wobei der Laufflächenabschnitt auf beiden Seiten der Äquatorialebene eine Laufflächenblockreihe (50) umfasst und sich jede Laufflächenblockreihe in Umfangsrichtung erstreckt;
- wobei jede Laufflächenblockreihe eine Reihe von primären Laufflächenblöcken (20) umfasst, die entlang der Umfangsrichtung beabstandet sind und Laufflächenrillen (38) definieren, die sich zwischen den primären Laufflächenblöcken befinden und einen Laufflächenrillenboden (22) definieren, von dessen Niveau aus sich die primären Laufflächenblöcke radial bis zu einer Höhe (H1) erstrecken, bei der jeder primäre Laufflächenblock eine radial äußerste Oberfläche (32) umfasst;
- wobei jeder primäre Laufflächenblock schräg zur Umfangsrichtung ausgerichtet ist und schräg zur Axialrichtung vom Mittelbereich zum Schulterbereich verläuft,
- wobei jeder primäre Laufflächenblock (20) die radial äußerste Oberfläche (32) und eine axial äußerste Schulteroberfläche (34) umfasst, wobei die Schulteroberfläche im Schulterbereich (16) quer zur radial äußersten Oberfläche (32) ausgerichtet ist, und
- wobei die radial äußerste Oberfläche (32) eine Stützfläche bereitstellt, die zum Stützen einer Raupenkette (200) geeignet ist, die auf dem Laufflächenabschnitt platziert werden kann, und die axial äußerste Schulteroberfläche (34) eine Stützfläche bereitstellt, die zum Stützen der Raupenkette geeignet ist;
- wobei jede Laufflächenblockreihe (50) ferner eine Reihe von erhöhten Abschnitten (24) umfasst, wobei sich jeder erhöhte Abschnitt in der Laufflächenrille (38) zwischen zwei aufeinanderfolgenden primären Laufflächenblöcken (20) befindet, mit einem davon der erhöhte Abschnitt verbunden ist, wobei sich jeder erhöhte Abschnitt radial von der Ebene des Laufflächenrillenbodens (22) erstreckt und in der Laufflächenrille schräg in Bezug auf die axiale Richtung zum Schulterbereich verläuft;
- wobei jeder erhöhte Abschnitt eine radial äußerste Oberfläche (26) aufweist, und zwar derart
- dass der erhöhte Abschnitt sich radial von der Höhe des Laufflächenrillenbodens bis zu einer Höhe (H2) erstreckt, die in Bezug auf die Höhe (H1) der radial äußersten Oberflächen (26) der primären Laufflächenblöcke verringert ist; und
- wobei jeder erhöhte Abschnitt außerdem eine axial äußerste Schulterfläche (28) aufweist, und zwar derart
- dass die Schulterfläche (28) im Schulterbereich (16) quer zur radial äußersten Fläche (26) des erhöhten Abschnitts (24) ausgerichtet ist; und
- dass die radial äußerste Oberfläche (26) des erhöhten Abschnitts (24) eine Schutzoberfläche bietet, die zum Schutz des Laufflächenrillenbodens vor der Raupenkette (200) geeignet ist, und dass die Schulteroberfläche (28) des erhöhten Abschnitts (24) eine Stützoberfläche bietet, die zum Stützen der Raupenkette geeignet ist **dadurch gekennzeichnet, dass** jeder erhöhte Abschnitt (24), mit dem sich jeder primäre Laufflächenblock (20) verbindet, an einer Rückwand des primären Laufflächenblocks (20) angeordnet ist, wobei eine Seitenoberfläche des primären Laufflächenblocks (20) die Rückwand bildet, und dass an einer Vorderwand des primären Laufflächenblocks (20) kein erhöhter Abschnitt (24) vorhanden ist, wobei sich die Vorderwand auf der gegenüberliegenden Seite des primären Laufflächenblocks (20) befindet.

2. Reifen nach Anspruch 1, wobei sich die Laufflächenrillenböden (22) und die erhöhten Abschnitte (24) bis zum Seitenwandabschnitt (14) erstrecken und zwar derart, dass die Schulterfläche (28) jedes erhöhten Abschnitts einen integralen Teil der Oberfläche des Seitenwandabschnitts bildet.

3. Reifen nach Anspruch 1 oder 2, wobei sich die Schulterfläche (28) des erhöhten Abschnitts (24) mit der Schulterfläche (34) des primären Laufflächenblocks (20) verbindet und zwar so, dass die Schulterfläche des erhöhten Abschnitts glatt bis zur Schulterfläche des primären Laufflächenblocks reicht.

4. Reifen nach Anspruch 3, wobei sich die Schulterfläche (28) des erhöhten Abschnitts (24) rillenlos oder nahtlos bis zur Schulterfläche (34) des primären Laufflächenblocks (20) erstreckt.

5. Reifen nach einem der Ansprüche 1 bis 4, wobei die Neigung (RB) der Schulterfläche (28) des erhöhten Abschnitts (24) in Bezug auf eine radiale Richtung (R) gleich oder im Wesentlichen gleich der Neigung (RA) der Schulterfläche (34) des primären Laufflächenblocks (20) in Bezug auf die radiale Richtung ist.

6. Reifen nach einem der Ansprüche 1 bis 5,
- wobei die Schulterflächen (34) der primären Laufflächenblöcke (20) und die Schulterflächen (28) der erhöhten Abschnitte (24) in einem kreisförmigen Muster angeordnet sind; und
- wobei die Schulterflächen der primären Laufflächenblöcke und die Schulterflächen der erhöhten Abschnitte jeweils einen Abschnitt umfassen, der zum Tragen der Raupenkette (200) auf dem Abschnitt geeignet ist, wobei die Abschnitte in radialer Richtung in gleichen Abständen (D1) oder in im Wesentlichen gleichen Abständen von der Rotationsachse (CL) des Reifens angeordnet sind.

7. Reifen nach einem der Ansprüche 1 bis 6, wobei die Schulterflächen (34) der primären Laufflächenblöcke (20) und die Schulterflächen (28) der erhöhten Abschnitte (24) in axialer Richtung gleiche Abstände (D2) oder im Wesentlichen gleiche Abstände von der Äquatorialebene (EP) aufweisen.

8. Reifen nach einem der Ansprüche 1 bis 7, wobei auf einer Seite des erhöhten Abschnitts (24) der erhöhte Abschnitt durch den Laufflächenrillenboden (22) von einem der primären Laufflächenblöcke (20) getrennt ist, und wobei auf der anderen Seite des erhöhten Abschnitts der erhöhte Abschnitt mit einem anderen der primären Laufflächenblöcke verbunden ist.

9. Reifen nach einem der Ansprüche 1 bis 8, wobei der erhöhte Abschnitt (24) mit dem primären Laufflächenblock (20) verbunden ist und zwar so, dass die radial äußerste Oberfläche (26) des erhöhten Abschnitts (24) sich in Richtung des primären Laufflächenblocks erstreckt und sanft nach oben gebogen ist, um eine Seitenoberfläche des primären Laufflächenblocks zu bilden.

10. Reifen nach einem der Ansprüche 1 bis 9, wobei sich die radial äußerste Oberfläche (26) jedes erhöhten Abschnitts (24) allmählich dem Niveau nähert, das durch den Laufflächenrillenboden (22) neben dem erhöhten Abschnitt definiert ist, während sich der erhöhte Abschnitt in Richtung des Mittelbereichs erstreckt.

11. Reifen nach einem der Ansprüche 1 bis 10, wobei sich die primären Laufflächenblöcke (20) im Mittelbereich (40) derart abwechseln, dass jeder zweite primäre Laufflächenblock ein primärer Laufflächenblock einer der Laufflächenblockreihen (50) und jeder zweite primäre Laufflächenblock ein primärer Laufflächenblock der anderen der Laufflächenblockreihen ist.

12. Forstmaschine, die einen Rahmen umfasst, wobei der Rahmen zwei gegenüberliegende Seiten aufweist und mit Rädern zum Antrieb der Forstmaschine ausgestattet ist und zwei oder mehr Radanordnungen mit Reifen auf jeder der beiden gegenüberliegenden Seiten des Rahmens aufweist, wobei mindestens eine der Radanordnungen Folgendes umfasst
- einen Reifen (100) gemäß einem der Ansprüche 1 bis 11,
- wobei die Forstmaschine ferner eine durchgehende Raupenkette (200) umfasst, die eine der Radanordnungen einschließlich des Reifens und/oder ein Paar von Radanordnungen einschließlich des Reifens umkreist und auf dem Laufflächenabschnitt (10) des Reifens platziert ist, wobei die Raupenkette in Kontakt mit den primären Laufflächenblöcken (20) und mit den erhöhten Abschnitten (24) ist.

13. Verfahren zum Anbringen von Reifen an einer Forstmaschine mit einem Rahmen, wobei der Rahmen zwei gegenüberliegende Seiten aufweist und mit Rädern zum Antrieb der Forstmaschine ausgestattet ist und zwei oder mehr Radanordnungen mit Reifen auf jeder der beiden gegenüberliegenden Seiten des Rahmens aufweist, wobei das Verfahren durch Folgendes gekennzeichnet ist
- Anbringen von mindestens einer der Radanordnungen, die einen Reifen (100) gemäß einem der Ansprüche 1 bis 11 umfasst, an dem Rahmen der Forstmaschine.

14. Verfahren nach Anspruch 13, wobei das Verfahren ferner Folgendes umfasst
- Installieren einer durchgehenden Raupenkette (200), die eine der Radanordnungen einschließlich des Reifens und/oder ein Paar von Radanordnungen einschließlich des Reifens umkreist und auf dem Laufflächenabschnitt (10) des Reifens platziert wird, wobei die Raupenkette in Kontakt mit den primären Laufflächenblöcken (20) und mit den erhöhten Abschnitten (24) ist.

## Revendications

1. Pneumatique à usage forestier, le pneu (100) comprenant :
- une section de bande de roulement en contact avec le sol (10) s'étendant autour du pneu dans la direction circonférentielle (C) du pneu, la section de bande de roulement définissant un plan équatorial imaginaire (EP) qui est perpendiculaire à une direction axiale (A) du pneu et passe à travers une région centrale (40) de la section de bande de roulement ;
- une paire de sections de talon (12), situées sur deux côtés opposés du pneu ;
- une paire de sections de flanc (14), situées sur deux côtés opposés du pneu, dans lequel chaque section de flanc s'étend entre la section de talon respective et la section de bande de roulement, et dans lequel la section de bande de roulement définit une paire de régions d'épaulement (16) adjacentes à la section de flanc respective ;
- dans lequel la section de bande de roulement comprend une rangée de blocs de bande de roulement (50) des deux côtés du plan équatorial et chaque rangée de blocs de bande de roulement s'étend dans la direction circonférentielle ;
- dans lequel chaque rangée de blocs de bande de roulement comprend une série de blocs de bande de roulement primaires (20) qui sont espacés le long de la direction circonférentielle et définissent des rainures de bande de roulement (38) situées entre les blocs de bande de roulement primaires et définissant un fond de rainure de bande de roulement (22) à partir du niveau duquel des blocs de bande de roulement primaires s'étendent radialement jusqu'à une hauteur (H1) à laquelle chaque bloc de bande de roulement primaire comprend une surface radialement la plus à l'extérieur (32) ;
- dans lequel chaque bloc de bande de roulement primaire est orienté obliquement par rapport à la direction circonférentielle et s'étend obliquement par rapport à la direction axiale depuis la région centrale jusqu'à la région d'épaulement,
- dans lequel chaque bloc de bande de roulement primaire (20) comprend la surface radialement la plus extérieure (32) et une surface d'épaulement axialement la plus extérieure (34), la surface d'épaulement dans la région d'épaulement (16) étant orientée transversalement par rapport à la surface radialement la plus extérieure (32), et
- dans lequel la surface radialement la plus extérieure (32) fournit une surface de support appropriée pour supporter une piste (200) qui peut être placée sur la section de bande de roulement et la surface d'épaulement axialement la plus externe (34) fournit une surface de support appropriée pour supporter la piste ;
- dans lequel chaque rangée de blocs de bande de roulement (50) comprend en outre une série de sections surélevées (24), chaque section surélevée étant située dans la rainure de bande de roulement (38) entre deux blocs de bande de roulement primaires consécutifs (20), avec l'un de ceux dont la partie surélevée est unie, chaque section surélevée s'étendant radialement à partir du niveau du fond de rainure de bande de roulement (22) et s'étendant dans la rainure de bande de roulement obliquement par rapport à la direction axiale jusqu'à la région d'épaulement ;
- dans lequel chaque section surélevée comprend une surface radialement la plus à l'extérieur (26) de telle manière
- que la section surélevée s'étend radialement depuis le niveau du fond de rainure de bande de roulement jusqu'à une hauteur (H2) réduite par rapport à la hauteur (H1) des surfaces radialement les plus extérieures (26) des blocs de bande de roulement primaires ; et
- dans lequel chaque section surélevée comprend en outre une surface d'épaulement axialement la plus à l'extérieur (28) de telle manière
- que la surface d'épaulement (28) dans la région d'épaulement (16) est orientée transversalement par rapport à la surface radialement la plus à l'extérieur (26) de la section surélevée (24) ; et
- que la surface radialement la plus à l'extérieur (26) de la section surélevée (24) fournit une surface de protection appropriée pour protéger le fond de la rainure de la bande de roulement de la piste (200) et la surface d'épaulement (28) de la section surélevée (24) fournit une surface de support approprié pour supporter la voie,
**caractérisé en ce que** chaque section surélevée (24) à laquelle chaque bloc de bande de roulement primaire (20) s'unit est située au niveau d'une paroi arrière du bloc de bande de roulement primaire (20), une surface latérale du bloc de bande de roulement primaire (20) formant la paroi arrière, et il n'y a pas de section surélevée (24) au niveau d'une paroi avant du bloc de bande de roulement primaire (20), la paroi avant étant située sur le côté opposé du bloc de bande de roulement primaire (20).

2. Pneu selon la revendication 1, dans lequel les fonds de rainure de bande de roulement (22) et les sections surélevées (24) s'étendent jusqu'à la section de flanc (14) de telle manière que la surface d'épaulement (28) de chaque section surélevée fait partie intégrante de la surface de la section de flanc.

3. Pneu selon la revendication 1 ou 2, dans lequel la surface d'épaulement (28) de la section surélevée (24) s'unit à la surface d'épaulement (34) du bloc de bande de roulement primaire (20) de telle sorte que la surface d'épaulement de la section surélevée la section s'étend doucement jusqu'à la surface de l'épaulement du bloc de bande de roulement primaire.

4. Pneu selon la revendication 3, dans lequel la surface d'épaulement (28) de la section surélevée (24) s'étend sans rainure ou sans couture jusqu'à la surface d'épaulement (34) du bloc de bande de roulement primaire (20) .

5. Pneu selon l'une quelconque des revendications 1 à 4, dans lequel l'inclinaison (RB) de la surface d'épaulement (28) de la section surélevée (24) par rapport à une direction radiale (R) est égale ou est sensiblement la même que l'inclinaison (RA) de la surface d'épaulement (34) du bloc de bande de roulement primaire (20) par rapport à la direction radiale.

6. Pneu selon l'une quelconque des revendications 1 à 5,
- dans lequel les surfaces d'épaulement (34) des blocs de bande de roulement primaires (20) et les surfaces d'épaulement (28) des sections surélevées (24) sont disposées selon un motif circulaire ; et
- dans lequel les surfaces d'épaulement des blocs de bande de roulement primaires et les surfaces d'épaulement des sections surélevées comprennent chacune une section appropriée pour supporter la piste (200) sur la section, lesquelles sections sont dans la direction radiale à des distances égales (D1) ou à des distances sensiblement égales de l'axe de rotation (CL) du pneu.

7. Pneu selon l'une quelconque des revendications 1 à 6, dans lequel les surfaces d'épaulement (34) des blocs de bande de roulement primaires (20) et les surfaces d'épaulement (28) des sections surélevées (24) sont dans la direction axiale à des distances égales (D2) ou à des distances sensiblement égales du plan équatorial (EP).

8. Pneu selon l'une quelconque des revendications 1 à 7, dans lequel sur un côté de la section surélevée (24), la section surélevée est séparée de l'un des blocs de bande de roulement primaires (20) par le fond de rainure de bande de roulement (22), et dans lequel de l'autre côté de la section surélevée, la section surélevée s'unit à un autre des blocs de bande de roulement primaires.

9. Pneu selon l'une quelconque des revendications 1 à 8, dans lequel la section surélevée (24) s'unit au bloc de bande de roulement primaire (20) de telle manière que la surface radialement la plus extérieure (26) de la section surélevée (24) s'étend vers le bloc de bande de roulement primaire et se courbe doucement vers le haut pour former une surface latérale du bloc de bande de roulement primaire.

10. Pneu selon l'une quelconque des revendications 1 à 9, dans lequel la surface radialement la plus extérieure (26) de chaque section surélevée (24) se rapproche progressivement du niveau défini par le fond de rainure de bande de roulement (22) adjacent à la section surélevée tandis que la section surélevée s'étend vers la région centrale.

11. Pneu selon l'une quelconque des revendications 1 à 10, dans lequel les blocs de bande de roulement primaires (20) alternent dans la région centrale (40) de telle sorte qu'un bloc de bande de roulement primaire sur deux est un bloc de bande de roulement primaire d'une des rangées de blocs de bande de roulement (50) et chaque autre bloc de bande de roulement primaire est un bloc de bande de roulement primaire de l'autre des rangées de blocs de bande de roulement.

12. Machine forestière, comprenant un châssis, le châssis ayant deux côtés opposés et étant équipé de roues pour la propulsion de la machine forestière et ayant deux ensembles de roues ou plus avec des pneus sur chacun des deux côtés opposés du châssis, au moins un des ensembles de roues comprenant
- un pneu (100) selon l'une quelconque des revendications 1 à 11,
- dans lequel la machine forestière comprend en outre une piste continue (200) encerclant l'un des ensembles de roues comportant le pneu et/ou une paire d'ensembles de roues comportant le pneu et étant placée sur la section de bande de roulement (10) du pneu, la piste étant en contact avec les blocs de bande de roulement primaires (20) et avec les sections surélevées (24).

13. Procédé d'installation de pneus sur une machine forestière comportant un châssis, le châssis ayant deux côtés opposés et étant équipé de roues pour la propulsion de la machine forestière et ayant deux ensembles de roues ou plus avec des pneus sur chacun des deux côtés opposés du châssis, le procédé étant **caractérisé par**
- le montage d'au moins un des ensembles de roues comprenant un pneu (100) selon l'une quelconque des revendications 1 à 11 sur le châssis de la machine forestière.

14. Procédé selon la revendication 13, dans lequel le procédé comprend en outre :
- l'installation d'une piste continue (200) pour faire le tour de l'un des ensembles de roues comportant le pneu et/ou d'une paire d'ensembles de roues comportant le pneu et étant placée sur la section de bande de roulement (10) du pneu, la piste étant en contact avec les blocs de bande de roulement primaires (20) et avec les sections surélevées (24).
